Europäisches Patentamt

European Patent Office

Office européen des brevets

(19)

(11) Veröffentlichungsnummer: **0 171 468**
**B1**

(12) **EUROPÄISCHE PATENTSCHRIFT**

(45) Veröffentlichungstag der Patentschrift: **22.08.90**

(51) Int. Cl.⁵: **H 04 L 25/26**

(21) Anmeldenummer: **84116471.8**

(22) Anmeldetag: **28.12.84**

(54) Sendeschaltung für Signalübertragungssysteme.

(30) Priorität: **17.08.84 DE 3430338**

(43) Veröffentlichungstag der Anmeldung:
**19.02.86 Patentblatt 86/08**

(45) Bekanntmachung des Hinweises auf die
Patenterteilung:
**22.08.90 Patentblatt 90/34**

(84) Benannte Vertragsstaaten:
**DE FR GB IT NL**

(56) Entgegenhaltungen:
**DE-A-2 829 276**
**US-A-4 024 501**

**OPTOELECTRONICS/FIBER-OPTICS
APPLICATIONS MANUAL, 1981, Seite 10.1 -
10.2.2; HEWLETT-PACKARD: Section 10, "Fiber
optics and optocouplers for digital data
transmission"**
**Elektronik, Jahrgang 1980, Heft 17, Seiten 63-66**

(73) Patentinhaber: **Nixdorf Computer
Aktiengesellschaft
Fürstenallee 7
D-4790 Paderborn (DE)**

(72) Erfinder: **Laue, Hans-Bodo
Eggering 60
D-4791 Altenbeken (DE)**

(74) Vertreter: **Schaumburg, Thoenes & Englaender
Mauerkircherstrasse 31 Postfach 86 07 48
D-8000 München 86 (DE)**

Courier Press, Leamington Spa, England.

**Beschreibung**

Die Erfindung betrifft eine Sendeschaltung für Signalübertragungssysteme zur Erzeugung eines bipolaren, leitungsgerechten Sendesignals durch Ansteuerung einer zwei Verstärkungszweige aufweisenden Leistungsendstufe mit einem Datensignal und einem Senderfreigabesignal über eine galvanisch trennende Entkopplungsstufe und eine logische Schaltung, wobei der Ausgang der Leistungsendstufe bei vorhandenem Senderfreigabesignal mit der Polarität des zu erzeugenden Sendesignals niederohmig und bei fehlendem Senderfreigabesignal hochohmig geschaltet ist und die Entkopplungsstufe der logischen Schaltung vorgeschaltet ist.

Eine solche Sendeschaltung ist in der Fig. 10.3.2-3 der Druckschrift "Optoelectronics, Fiberoptics Application Manual", 1981, der Firma Hewlett-Packard gezeigt. Bei dieser Sendeschaltung wird ein Datensignal betriebsseitig über ein NAND-Glied, mit dem es mit einem Senderfreigabesignal logisch verknüpft wird, einem ersten Optokoppler zugeführt. Diese logische Verknüpfung des Datensignals mit dem Senderfreigabesignal wird nur vorgenommen, damit die Leuchtdiode dieses ersten Optokopplers nur dann eingeschaltet wird, wenn der Sender zum Senden freigegeben wird. Es kann dadurch eine unnötige Alterung der Optokoppler-Leuchtdiode vermieden werden. Durch den Optokoppler wird das Datensignal von der Betriebsseite galvanisch entkoppelt der Leitungsseite des Senders zugeführt und steuert dort eine Leistungsendstufe an. Diese ist in Form einer integrierten Schaltung realisiert. Sie hat zwei Ausgänge, über die ein erdsymmetrisches Sendesignal ausgegeben werden kann. Die beiden Ausgänge können über einen zweiten Eingang der Leistungsendstufe gleichzeitig hochohmig geschaltet werden. Dieser zweite Eingang der Leistungsendstufe wird mit dem Senderfreigabesignal über ein betriebsseitiges Negationsglied und einen zweiten Optokoppler angesteuert. Dieser zweite Optokoppler dient zur galvanischen Entkopplung des betriebsseitigen Senderfreigabesignals von der Leitungsseite des Senders. Bei dieser bekannten Sendeschaltung wird als Leistungsendstufe ein vergleichsweise kompliziert aufgebauter Leitungstreiberbaustein verwendet, der auch die komplette Ansteuerlogikschaltung enthält. Dies hat den Nachteil, daß im Falle eines Defekts nur der Leistungsendstufe der vergleichsweise teuere Leitungstreiberbaustein ausgetauscht werden muß.

Aus der Zeitschrift "Elektronik", Jahrgang 1980, Heft 17, Seiten 63 bis 66 ist eine Sendeschaltung für Signalübertragungssysteme mit einer Endstufe bekannt, die durch zwei komplementäre Transistoren gebildet ist, welche an ihren Emittern über einen gemeinsamen Widerstand mit der Übertragungsleitung verbunden sind. Die Basiselektroden der beiden Transistoren sind gleichfalls miteinander verbunden und über einen Strombegrenzungswiderstand mit der vorgeordneten Ansteuerschaltung verbunden. Wie der Beschreibung dieser Schaltung entnommen werden kann, müssen schnelle Schalttransistoren verwendet werden, um ausschließlich Rechtecksignale übertragen zu können. Dies ist erforderlich, weil der an den Basiselektroden vorgesehene Strombegrenzungswiderstand eine die Schaltvorgänge der Transistoren verzögernde Wirkung hat.

Es ist daher Aufgabe der Erfindung, eine einfachere und somit kostengünstigere Leistungsendstufe einer Sendeschaltung für Signalübertragungssysteme anzugeben.

Diese Aufgabe wird bei einer Sendeschaltung eingangs genannter Art erfindungsgemäß dadurch gelöst, daß die Leistungsendstufe durch zwei komplementäre, an ihren Emittern über einen gemeinsamen Widerstand mit der Übertragungsleitung des Signalübertragungssystems verbundene Transistoren gebildet ist, deren Basiselektroden mit jeweils einem Ausgang der logischen Schaltung direkt verbunden sind.

Die erfindungsgemäße Leistungsendstufe zeichnet sich durch ihren außergewöhnlich einfachen Aufbau aus, da sie nur aus einem einzigen Logikbaustein und zwei komplementären Transistoren gebildet ist.

Im Gegensatz zur vorbekannten Sendeschaltung, mit der am Ausgang nur ein Differenzsignal erzeugt wird, kann mit dieser Leistungsendstufe an nur einem Pol ihres Ausgangs das bipolare Sendesignal erzeugt werden. Ihr zweiter Ausgangspol ist dann mit dem 0 Volt-Anschluß einer leitungsseitigen Senderversorgungsspannung identisch.

Die Emitter der beiden komplementären Transistoren sind über einen ihnen gemeinsamen Widerstand mit der Übertragungsleitung des Signalübertragungssystems verbunden. Daraus ergibt sich, daß ihre Kollektoren mit der leitungsseitigen Senderversorgungsspannung derart beaufschlagt werden, daß der Kollektor des npn-Transistors an der positiven Versorgungsspannung und der Kollektor des pnp-Transistors an der negativen Versorgungsspannung liegt. Werden die Basen der beiden komplementären Transistoren beispielsweise jeweils mit positivem Spannungspotential angesteuert, so ist der npn-Transistor leitend geschaltet, während der pnp-Transistor sperrt. Es wird dadurch die positive leitungsseitige Versorgungsspannung über den leitend geschalteten npn-Transistor und über den beiden Transistoren gemeinsamen Widerstand als Signalspannung an die Übertragungsleitung gelegt. Werden umgekehrt beide Basen der komplementären Transistoren jeweils mit negativem Spannungspotential angesteuert, so sperrt der npn-Transistor, und der pnp-Transistor wird leitend geschaltet. In diesem Falle wird die negative leitungsseitige Senderversorgungsspannung über den durchgeschalteten pnp-Transistor und den beiden Transistoren gemeinsamen Widerstand als Signalspannung an die Übertragungsleitung gelegt. Wird dagegen die Basis des npn-Transistors mit negativem Spannungspotential angesteuert, während die Basis des pnp-Transistors gleichzeitig mit positivem Spannungspotential angesteuert wird, so sind beide Transistoren gleichzeitig sperrend geschaltet, wodurch der Ausgang der Leistungsendstufe hochohmig wird. Die Ansteuerung der Basen der beiden Transistoren wird dabei über die logische Schaltung und die Entkopplungsstufe von dem Datensignal und dem Senderfreigabesignal vorgenommen.

In einer Weiterbildung der erfindungsgemäßen Sendeschaltung umfaßt die logische Schaltung ein erstes und ein zweites Verknüpfungsglied, wobei das erste Verknüpfungsglied als Eingangssignale das Senderfreigabesignal und das Datensignal erhält und mit seinem Ausgangssignal einerseits einen Eingang des zweiten Verknüpfungsgliedes beaufschlagt und andererseits die Basis des einen Transistors ansteuert, und wobei das zweite Verknüpfungsglied als zweites Eingangssignal das Senderfreigabesignal erhält und mit seinem Ausgangssignal die Basis des anderen Transistors ansteuert. Es reichen also lediglich zwei Verknüpfungsglieder aus, um das Datensignal mit dem Senderfreigabesignal so zu verknüpfen, daß die Basen der beiden Transistoren derart angesteuert werden, daß einerseits die positive leitungsseitige Senderversorgungsspannung und andererseits die negative leitungsseitige Versorgungsspannung als Signalspannung an die Übertragungsleitung gelegt werden kann, und daß darüber hinaus auch der Senderausgang hochohmig geschaltet werden kann.

In einer vorteilhaften Weiterbildung wird die logische Schaltung aus vier Verknüpfungsgliedern aufgebaut. Dabei wird das erste Verknüpfungsglied über ein drittes Verknüpfungsglied mit dem Datensignal angesteuert, wobei der zweite Eingang des dritten Verknüpfungsgliedes mit der leitungsseitigen Senderversorgungsspannung beaufschlagt ist. Außerdem steuert das erste Verknüpfungsglied die Basis des einen Transistors über ein viertes Verknüpfungsglied an, dessen zweiter Eingang mit der leitungsseitigen Senderversorgungsspannung beaufschlagt ist. Diese Art der Ansteuerung der Basen der beiden Transistoren hat den Vorteil, daß bei Ausfall der leitungsseitigen Senderversorgungsspannung und/ oder bei Ausfall der Entkopplungsstufe für das Senderfreigabesignal der Senderausgang hochohmig ist und somit der Datenverkehr anderer an die Übertragungsleitung angeschlossener Schaltungen nicht gestört wird. Die Verknüpfung des Datensignals und des Senderfreigabesignals mit der leitungsseitigen Senderversorgungsspannung bewirkt auch, daß beim Hochlaufen der leitungsseitigen Senderversorgungsspannung der Datenverkehr anderer an die Übertragungsleitung angeschlossener Sender und Empfänger nicht gestört wird, wenn die Optokoppler-Leuchtdiode, die das Senderfreigabesignal koppelt, ausgeschaltet bleibt.

Vorzugsweise werden als Verknüpfungsglieder NOR-Glieder in C-MOS-Technologie verwendet. Sie werden mit Niederpegel-Leitungssignalen, also in negativer Logik betrieben. Dies bedeutet, daß der Pegelzustand L (LOW) dem logischen Zustand 1 und der Pegelzustand H (HIGH) dem logischen Zustand 0 zugeordnet ist. Diese Zuordnung gilt auch für das im folgenden zu beschreibende Ausführungsbeispiel der Erfindung. NOR-Glieder in C-MOS-Technologie haben den Vorteil, daß ihre Ausgangsstufen die Versorgungsspannungen mit besonders niedrigen Restspannungen auf die Basen der Transistoren schalten. Sie können platzsparend in einem Gehäuse untergebracht sein. Bei paralleler Ansteuerung des zweiten und vierten NOR-Verknüpfungsgliedes sind dann gleiche Signaldurchlaufzeiten gewährleistet, wodurch sichergestellt ist, daß die beiden Transistoren der Leistungsendstufe nicht gleichzeitig leitend werden, aber auch keine Übernahmeverzerrungen verursachen. Es wird dadurch erst ermöglicht, daß die sonst zwischen den Emittern der beiden Transistoren geschalteten Schutzwiderstände entfallen können.

Die Erfindung wird im folgenden an Hand eines Ausführungsbeispiels näher erläutert. Es zeigen:

Fig. 1 den Schaltplan eines Ausführungsbeispiels einer Sendeschaltung für Signalübertragungssysteme und

Fig. 2 eine Pegeltabelle, die den Signalverlauf in der Sendeschaltung von Fig. 1 für die verschiedenen Sendereingangssignale wiedergibt.

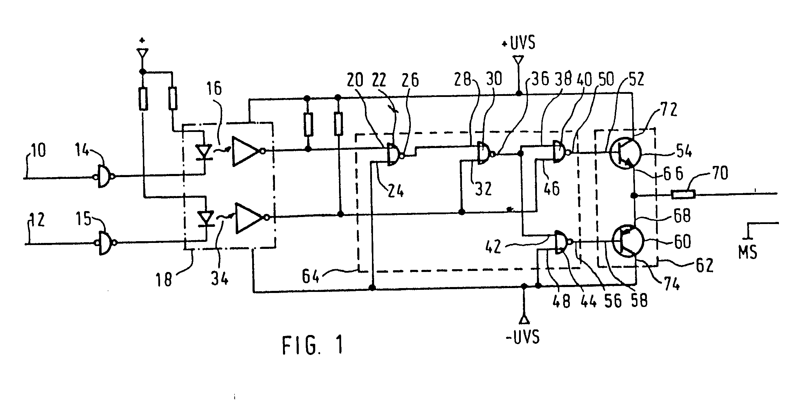

Die Sendeschaltung für Signalübertragungssysteme von Fig. 1 besitzt einen ersten Eingang 10 zur Eingabe des Datensignals und einen zweiten Eingang 12 zur Eingabe des Senderfreigabesignals. Beide Eingänge weisen nicht invertierende Treiber 14 und 15 auf. Das Datensignal beaufschlagt über einen ersten Optokoppler 16 einer Optokoppleranordnung 18 einen ersten Eingang 20 eines NOR-Verknüpfungsgliedes 22. Der zweite Eingang des NOR-Verknüpfungsgliedes 22 ist mit einer negativen leitungsseitigen Senderversorgungsspannung -UVS beaufschlagt. Der Ausgang 26 des NOR-Verknüpfungsgliedes 22 ist mit einem ersten Eingang 28 eines NOR-Verknüpfungsgliedes 30 verbunden. Der zweite Eingang 32 des NOR-Verknüpfungsgliedes 30 wird über einen zweiten Optokoppler 34 der Optokoppleranordnung 18 mit dem Senderfreigabesignal angesteuert. Der Ausgang 36 des NOR-Verknüpfungsgliedes 30 ist sowohl mit einem ersten Eingang 38 eines NOR-Verknüpfungsgliedes 40 als auch mit einem ersten Eingang 42 eines NOR-Verknüpfungsgliedes 44 verbunden. Während der zweite Eingang 46 des NOR-Verknüpfungsgliedes 40 mit dem Senderfreigabesignal angesteuert wird, wird der zweite Eingang 48 des NOR-Verknüpfungsgliedes 44 mit der negativen leitungsseitigen Senderversorgungsspannung -UVS beaufschlagt. Der Ausgang 50 des NOR-Verknüpfungsgliedes 40 steuert die Basis 52 eines npn-Transistors 54 an. Der Ausgang 56 des NOR-Verknüpfungsgliedes 44 ist mit der Basis 58 eines pnp-Transistors 60 verbunden. Beide Transistoren 54 und 60 bilden zusammen die Leistungsendstufe 62, die von der aus den vier NOR-Gliedern aufgebauten logischen Schaltung 64 angesteuert wird. Die Emitter 66 und 68 der beiden Transistoren 54 und 60 sind über einen ihnen gemeinsamen Widerstand 70 mit einer ersten Ader einer Übertra-

gungsleitung (nicht dargestellt) eines Signalübertragungssystems verbunden. Die zweite Ader der Übertragungsleitung ist dabei an den Nullpunkt MS der leitungsseitigen Senderversorgungsspannungen ±UVS gelegt. Während der Kollektor 72 des npn-Transistors 54 an die positive leitungsseitige Senderversorgungsspannung +UVS gelegt ist, ist der Kollektor 74 des pnp-Transistors 60 mit der negativen leitungsseitigen Senderversorgungsspannung -UVS beaufschlagt.

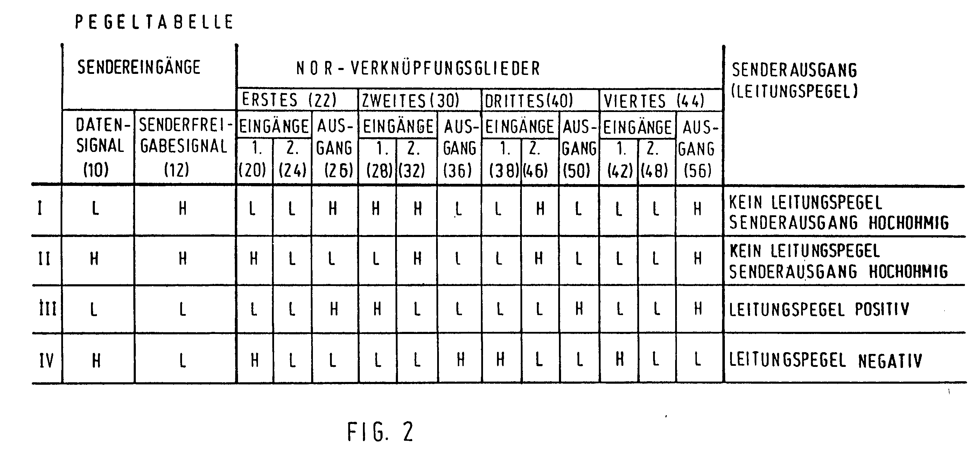

Im folgenden wird die Funktionsweise der Sendeschaltung von Fig. 1 an Hand der Pegeltabelle von Fig. 2 in Verbindung mit dem Schaltplan der Sendeschaltung von Fig. 1 erläutert.

In der Pegeltabelle sind die Pegelzustände jeweils der beiden Eingänge und des Ausgangs der vier in negativer Logik betriebenen NOR-Verknüpfungsglieder und der Leitungspegel am Senderausgang in Abhängigkeit von den Pegelzuständen der Sendereingangssignale, also des Datensignals und des Senderfreigabesignals dargestellt. Diese Pegelzustände lassen sich durch die Bezeichnung H und L charakterisieren, je nachdem, ob die Spannung größer als ein vorgegebener Wert $U_H$ oder kleiner als ein vorgegebener Wert $U_L$ ($U_L < U_H$) ist. Ist die Spannung größer als $U_H$, so befindet sie sich im pegelzustand H (HIGH); ist sie dagegen kleiner als $U_L$, so befindet sie sich im pegelzustand L (LOW).

Die Zeilen I und II der Pegeltabelle zeigen die Pegelzustände in der Sendeschaltung für den Fall, daß der Sender ausgeschaltet ist (Senderfreigabesignal Pegelzustand H), in den Zeilen III und IV sind diese Pegelzustände dagegen für den Pall dargestellt, daß der Sender eingeschaltet ist (Senderfreigabesignal pegelzustand L). Liegt beispielsweise, wie aus Zeile I der Pegeltabelle zu entnehmen ist, bei ausgeschaltetem Sender (Senderfreigabesignal Pegelzustand H) ein Pegel L am Datensignaleingang an, so erhält der erste Eingang 20 des NOR-Verknüpfungsgliedes 22 über den nicht invertierenden Treiber 14 und den ersten Optokoppler 16 einen Pegel L. Der zweite Eingang 24 des NOR-Verknüpfungsgliedes 22 wird durch die negative leitungsseitige Senderversorgungsspannung -UVS ebenfalls mit einem Pegel L beaufschlagt, so daß am Ausgang 26 des NOR-Verknüpfungsgliedes 22 ein Pegel H anliegt, mit dem der erste Eingang 28 des NOR-Verknüpfungsgliedes 30 angesteuert wird. Der zweite Eingang 32 des NOR-Verknüpfungsgliedes 30 wird durch das Senderfreigabesignal (Sendereingang 12) über den zweiten nicht invertierenden Treiber 15 und den zweiten Optokoppler 34 mit einem Pegel H beaufschlagt, so daß sich am Ausgang 36 des NOR-Verknüpfungsgliedes 30 ein Pegel L ergibt, der einerseits am ersten Eingang 38 des NOR-Verknüpfungsgliedes 40 und andererseits auch am ersten Eingang 42 des NOR-Verknüpfungsgliedes 44 anliegt. Da der zweite Eingang 46 des NOR-Verknüpfungsgliedes 40 vom Senderfreigabesignal (Eingang 12) über den zweiten nicht invertierenden Treiber 15 und den zweiten Optokoppler 34 mit einem Pegel H beaufschlagt wird, erhält man entsprechend der NOR-

Verknüpfung am Ausgang 50 des NOR-Verknüpfungsgliedes 40 einen Pegel L, der die Basis des npn-Transistors 54 ansteuert und diesen sperrend schaltet. Das NOR-Verknüpfungsglied 44 wird an seinem zweiten Eingang 48 durch die negative leitungsseitige Versorgungsspannung -UVS mit einem Pegel L beaufschlagt, so daß sich an seinem Ausgang 56 ein pegel H ergibt, der die Basis des pnp-Transistors 60 ansteuert und diesen sperrend schaltet. Es kann also festgestellt werden, daß beide Transistoren 54 und 60 der Leistungsendstufe 62 sperrend geschaltet sind, wenn der Sender ausgeschaltet ist (Senderfreigabesignal Pegelzustand H) und am Datensignaleingang ein Pegel L anliegt. Sind beide Transistoren 54 und 60 sperrend geschaltet, so wird weder die positive noch die negative leitungsseitige Senderversorgungsspannung als Signalspannung über den Senderausgang an die Übertragungsleitung gelegt; in diesem Falle ist der Senderausgang hochohmig.

In Zeile II der Pegeltabelle ist der Signalverlauf in der Sendeschaltung für den Fall dargestellt, daß am Datensignaleingang 10 bei ausgeschaltetem Sender (Senderfreigabesignal Pegelzustand H) ein Pegel H anliegt. Auch in diesem Fall wird, wie aus Fig. 2 in Verbindung mit Fig. 1 zu entnehmen ist, die Basis des npn-Transistors 54 vom Ausgang 50 des NOR-Verknüpfungsgliedes 40 mit einem Pegel L und die Basis des pnp-Transistors 60 vom Ausgang 56 des NOR-Verknüpfungsgliedes 44 mit einem Pegel H angesteuert, so daß beide Transistoren 54 und 60 sperrend geschaltet sind und somit der Senderausgang hochohmig ist.

Im folgenden werden die in den Zeilen III und IV der Pegeltabele dargestellten Pegelzustände in der Sendeschatung bei eingeschaltetem Sender (Senderfreigabesignal Pegelzustand L) betrachtet.

Für den Fall, daß der Datensignaleingang 10 des Senders mit einem Pegel L beaufschlagt wird (Zeile III), ist der npn-Transistor 54 über den Pegel H am Ausgang 50 des NOR-Verknüpfungsgliedes 40 leitend geschaltet, während der pnp-Transistor über den Pegel H am Ausgang 56 des NOR-Verknüpfungsgliedes 44 sperrend geschaltet ist. Über den leitend geschalteten npn-Transistor 54 wird die positive leitungsseitige Senderversorgungsspannung +UVS als Signalspannung an den Senderausgang gelegt.

Wird dagegen der Datensignaleingang 10 bei eingeschaltetem Sender (Senderfreigabesignal Pegelzustand L) mit einem Pegel H angesteuert, so ist der npn-Transistor 54 über den Pegel L am Ausgang 50 des NOR-Verknüpfungsgliedes 40 sperrend geschaltet, während der pnp-Transistor 60 über den Pegel L am Ausgang 56 des NOR-Verknüpfungsgliedes 44 leitend geschaltet ist. Über diesen durchgeschalteten pnp-Transistor 60 wird die negative leitungsseitige Senderversorgungsspannung -UVS als Signalspannung an den Senderausgang gelegt.

Zusammenfassend kann über die Funktionsweise der Sendeschaltung festgestellt werden, daß der Senderausgang bei ausgeschaltetem

Sender unabhängig vom Datensgnal hochohmig ist und daß bei eingeschaltetem Sender der Leitungpegel am Senderausgang abhängig vom Datensignal positiv bzw. negativ ist.

## Patentansprüche

1. Sendeschaltung für Signalübertragungssysteme zur Erzeugung eines bipolaren, leitungsgerechten Sendesignals durch Ansteuerung einer zwei Verstärkungszweige aufweisenden Leistungsendstufe mit einem Datensignal und einem Senderfreigabesignal über eine galvanisch trennende Entkopplungsstufe und eine logische Schaltung, wobei der Ausgang der Leistungsendstufe bei vorhandenem Senderfreigabesignal mit der Polarität des zu erzeugenden Sendesignals niederohmig und bei fehlendem Senderfreigabesignal hochohmig geschaltet ist und die Entkopplungsstufe der logischen Schaltung vorgeschaltet ist, dadurch gekennzeichnet, daß die Leistungsendstufe (62) durch zwei komplementäre, an ihren Emittern über einen gemeinsamen Widerstand (70) mit der Übertragungsleitung des Signalübertragungssystems verbundene Transistoren (54, 60) gebildet ist, deren Basiselektroden (52, 58) mit jeweils einem Ausgang (50, 56) der logischen Schaltung (64) direktverbunden sind.

2. Sendeschaltung nach Anspruch 1, dadurch gekennzeichnet, daß die logische Schaltung (64) ein erstes und ein zweites Verknüpfungsglied (30, 40) umfaßt, wobei das erste Verknüpfungsglied (30) als Eingangssignale das Senderfreigabesignal und das Datensignal erhält und mit seinem Ausgangssignal einerseits einen Eingang (38) des zweiten Verknüpfungsgliedes (40) beaufschlagt und andererseits die Basis (58) des einen Transistors (60) ansteuert, und wobei das zweite Verknüpfungsglied (40) als zweites Eingangssignal das Senderfreigabesignal erhält und mit seinem Ausgangssignal die Basis (52) des anderen Transistors (54) ansteuert.

3. Sendeschaltung nach Anspruch 2, dadurch gekennzeichnet, daß das erste Verknüpfungsglied (30) über ein drittes Verknüpfungsglied (22) mit dem Datensignal angesteuert wird, wobei der zweite Eingang (24) des dritten Verknüpfungsgliedes (22) mit einer leitungsseitigen Versorgungsspannung beaufschlagt ist.

4. Sendeschaltung nach Anspruch 2 oder 3, dadurch gekennzeichnet, daß das erste Verknüpfungsglied (30) die Basis (58) des einen Transistors (60) über ein viertes Verknüpfungsglied (44) ansteuert, dessen zweiter Eingang (48) mit der leitungsseitigen Versorgungsspannung beaufschlagt ist.

5. Sendeschaltung nach einem der Ansprüche 2 bis 4, dadurch gekennzeichnet, daß die Verknüpfungsglieder (22, 30, 40, 44) NOR-Glieder in C-MOS-Ausführung sind.

## Revendications

1. Circuit d'émission pour des systèmes de transmission de signaux, pour la création d'un signal d'émission bipolaire destné à une ligne, par la commande d'un étage de sortie de puissance à deux branches amplificatrices au moyen d'un signal de données et d'un signal d'autorisation d'émission par l'intermédiaire d'un étage de découplage à séparation galvanique et d'un circuit logique, dans lequel la sortie de l'étage de sortie de puissance est raccordée lors d'un signal existant d'autorisation d'émission à la polarité de faible impédance du signal d'émission à produire et d'impédance élevée en l'absence de signal autorisant l'émission et l'étage de découplage du circuit logique est monté en amont, caractérisé en ce que l'étage de sortie de puissance (62) est constituée par deux transistors complémentaires (54, 60) reliés par leurs émetteurs, par l'intermédiaire d'une résistance commune (70), à la ligne de transmission du système de transmission de signaux, les électrodes de base (52, 58) de ces transistors étant reliées chacune respectivement directement à une sortie (50, 56) du circuit logique (64).

2. Circuit d'émission selon la revendication 1, caractérisé en ce que le circuit logique (64) comprend un premier et un deuxième élément logique (30, 40), le premier élément logique (30) recevant comme signaux d'entrée le signal d'autorisation d'émission et le signal de données et, par son signal de sortie, d'une part il alimente une entrée (38) du deuxième élément logique (40) et d'autre part il commande la base (58) de l'un (60) des transistors etle deuxième élément logique (40) recevant comme deuxième signal d'entrée le signal d'autorisation d'émission et commandant par son signal de sortie la base (52) de l'autre transistor (54).

3. Circuit d'émission selon la revendication 2, caractérisé en ce que le premier élément logique (30) est commandé à l'aide du signal de données par l'intermédiaire d'un troisième élément logique (22) la deuxième entrée (24) de ce troisième élément logique (22) étant alimenté à une tension d'alimentation du côté de la ligne.

4. Circuit d'émission selon la revendication 2 ou 3, caractérisé en ce que le premier élément logique (30) commande la base (58) de l'un (60) des transistors par l'intermédiaire d'un quatrième élément logique (44), dont la deuxième entrée (48) est alimentée à la tension d'alimentation du côté de la ligne.

5. Circuit d'émission selon l'une des revendications 2 à 4, caractérisé en ce que les éléments logiques (22, 30, 40, 44) sont des éléments NON-OU en mode.de réalisation C-MOS.

## Claims

1. Sending circuit for signal transmission systems to produce a bipolar, transmission-ready transmit signal by driving a power output stage having two amplifying branches with a data signal and a transmitter release signal via a galvanically isolating decoupling stage and a logic circuit, whereby the output of the power output stage is switched to low resistance with the polarity of the transmit signal to be produced in the presence of a transmitter release signal and to high resistance in the absence of a transmitter release signal and the decoupling stage is connected in series before the logic circuit, characterized in that the power output stage (62) is composed of two complementary transistors (54, 60) connected at their emitters via a common resistor (70) with the transmission line of the signal transmission system, the base electrodes (52, 58). of the transistors being respectively directly connected with an output (50, 56) of the logic circuit (64).

2. Sending circuit according to claim 1, characterized in that the logic circuit (64) has a first and a second logic element (30, 40), wherein the first logic element (30) receives as input signals the transmission release signal and the data signal and with its output signal on the one hand triggers an input (38) of the second logic element (40) and on the other hand triggers the base (58) of the one transistor (60), and wherein the second logic element (40) receives as second input signal the transmission release signal and triggers the base (52) of the other transistor (54) with its output signal.

3. Sending circuit according to claim 2, characterized in that the first logic element (30) is triggered by the data signal via a third logic element (22), wherein the second input (24) of the third logic element (22) is fed by a line-side supply voltage.

4. Sending circuit according to claim 2 or 3, characterized in that the first logic element (30) triggers the base (58) of the one transistor (60) via a fourth logic element (44) the second input (48) of which is triggered by the line-side supply voltage.

5. Sending circuit according to one of claims 2 to 4, characterized in that the logic elements (22, 30, 40, 44) are NOR elements in C-MOS technology.

FIG. 1

EP 0 171 468 B1

PEGELTABELLE

| | SENDEREINGÄNGE | | NOR - VERKNÜPFUNGSGLIEDER | | | | | | | | | | | SENDERAUSGANG (LEITUNGSPEGEL) |
|---|---|---|---|---|---|---|---|---|---|---|---|---|---|---|---|
| | | | ERSTES (22) | | | ZWEITES (30) | | | DRITTES (40) | | | VIERTES (44) | | | |
| | DATEN-SIGNAL (10) | SENDERFREI-GABESIGNAL (12) | EINGÄNGE | | AUS-GANG | EINGÄNGE | | AUS-GANG | EINGÄNGE | | AUS-GANG | EINGÄNGE | | AUS-GANG | |
| | | | 1. (20) | 2. (24) | (26) | 1. (28) | 2. (32) | (36) | 1. (38) | 2. (46) | (50) | 1. (42) | 2. (48) | (56) | |
| I | L | H | L | L | H | H | H | L | L | H | L | L | L | H | KEIN LEITUNGSPEGEL SENDERAUSGANG HOCHOHMIG |
| II | H | H | H | L | L | L | H | L | L | H | L | L | L | H | KEIN LEITUNGSPEGEL SENDERAUSGANG HOCHOHMIG |
| III | L | L | L | L | H | H | L | L | L | L | H | L | L | H | LEITUNGSPEGEL POSITIV |
| IV | H | L | H | L | L | L | L | H | H | L | L | H | L | L | LEITUNGSPEGEL NEGATIV |

FIG. 2